# EUROPEAN PATENT APPLICATION

(11) **EP 4 583 071 A1**
(43) Date of publication of application: **09.07.2025**
(21) Application number: 23875117.6
(22) Date of filing: 20.09.2023
(51) Int. Cl.: G07F 17/32, G07F 17/34

(54) **TOPPER DEVICE FOR GAME MACHINE, AND GAME MACHINE USING SAME**

(30) Priority: 05.10.2022 KR 20220126875
(71) Applicant: Tovis Co., Ltd., Incheon 21999 (KR)
(72) Inventor: CHOI, Hyun Seok, Incheon 21980 (KR)
(74) Representative: BCKIP Part mbB
(86) International application number: PCT/KR2023/014214
(87) International publication number: WO 2024/076050

(57) **Abstract**

The topper apparatus for a game machine according to one technical aspect of the present invention, which is engaged to the upper portion of a main body of the game machine and operates in conjunction with the game machine, and the topper apparatus for the game machine comprises a display module, a housing to which the display module is fixed and which includes a second engaging structure capable of being engaged to a first engaging structure on the upper portion of the main body of the game machine, and a non-engaging contact receiving module that is energized by coming into non-engaging contact with a non-engaging contact transmitting module, which is positioned on the upper portion of the main body of the game machine, when the second engaging structure is engaged to the first engaging structure.

## Description

### Technical Field

The present invention relates to a topper apparatus for a game machine and a game machine using the same.

### Background Art

Game machines are for providing interest and entertainment to users by running game software such as slot machines, and recently, various technologies have been applied to game machines for the advancement of game machines and the convenience of interfaces.

In particular, in a game machine field such as a slot machine, a separate display is provided at the top of the game machine to provide a user with a variety of information and visually display an event such as a jack pot when the event occurs, and this is referred to as a topper or a topper display.

The topper apparatus is positioned at the uppermost end of the main body of the game machine, but can be managed and replaced as a separate display device that can be separated from the main body of the game machine. That is, since the topper apparatus protrudes from and is fixed to the upper portion of the main body of the game machine, the topper apparatus is frequently damaged when moving, and in order to prevent such damage, the topper apparatus needs to be separated or replaced.

Meanwhile, since such a topper apparatus operates by receiving the power and display information from the main body of the game machine, the main body of the game machine, the power line, and the data transmission line should be separately engaged and connected to each other. In the process of separately engaging the power line and the data transmission line, there is a limitation in that work difficulty occurs, and also difficulty occurs in maintenance of the topper apparatus.

Prior Art: (Patent Document 0001) U.S. Patent No. 11,043,064 ("Gaming machine, control method for machine, and program for gaming machine", Publication Date: March 5, 2020)

### Disclosure

### Technical problem

One technical aspect of the present invention is to solve the problems of the prior art described above.

According to an embodiment of the present invention, a topper apparatus for a game machine and a game machine using the same can be provided, which enables convenient electrical connection between the topper apparatus and the game machine without separate wiring by applying a non-engaging contact receiving module to the topper apparatus.

According to an embodiment of the present invention, a topper apparatus for a game machine and a game machine using the same can be provided, which enables convenient power and data transmission between the topper apparatus and the game machine without separate wiring, by using a power reception connector and a data transmission connector included in the non-engaging contact receiving module.

According to an embodiment of the present invention, a topper apparatus for a game machine and a game machine using the same can be provided, which can prevent noise in transmission data in advance by minimizing overlapping noise caused by a magnetic field generated during energization, through configuring the contact angles of a power reception connector and a data transmission connector included in the non-engaging contact receiving module of the topper apparatus to be different from each other when the module comes into energized contact with the game machine.

The objects of the present invention are not limited to those mentioned above, and other objects not specifically mentioned will be clearly understood by those skilled in the art from the following description.

### Technical Solution

According to one aspect of the present invention, a topper apparatus for a game machine is proposed. The topper apparatus for a game machine, which is engaged to the upper portion of a main body of the game machine and operates in conjunction with the game machine, and the topper apparatus for the game machine comprises a display module, a housing to which the display module is fixed and which includes a second engaging structure capable of being engaged to a first engaging structure on the upper portion of the main body of the game machine and a non-engaging contact receiving module that is energized by coming into non-engaging contact with a non-engaging contact transmitting module, which is positioned on the upper portion of the main body of the game machine, when the second engaging structure is engaged to the first engaging structure.

In one embodiment, the non-engaging contact receiving module is located in an inner space formed by the second engaging structure included in the housing.

In one embodiment, the non-engaging contact transmitting module is located in an inner space formed by the first engaging structure on the upper portion of the main body of the game machine.

In one embodiment, the non-engaging contact receiving module comprises a plurality of spring pins arranged to be spaced apart from each other, and the non-engaging contact transmitting module comprises a plurality of electrode terminals arranged to correspond to an arrangement of the plurality of spring pins.

In one embodiment, when the first engaging structure and the second engaging structure are fixed, the plurality of spring pins are in contact with the plurality of electrode terminals to be energized.

In one embodiment, the plurality of spring pins comprises a first spring pin group for receiving power and a second spring pin group for receiving data, the first spring pin group and the second spring pin group are spatially separated from each other.

In one embodiment, the first engaging structure is slidably fixed to the second engaging structure.

In one embodiment, the first engaging structure comprises a first surface and a second surface opposite to the first surface, and the second engaging structure comprises a third surface that slides in contact with the first surface and a fourth surface that slides in contact with the second surface and is opposite to the third surface.

In one embodiment, the non-engaging contact receiving module is provided in an inner space divided by the third surface and the fourth surface when the first engaging structure and the second engaging structure are fixed.

In one embodiment, the third surface and the fourth surface are made of a non-metallic material.

Another aspect of the present invention proposes a game machine. The game machine comprising a main body of the game machine configured to display a game image through a main body display, and control an operation of a game according to an input of a user to provide the user with the game and a topper apparatus for a game machine engaged to an upper portion of the main body of the game machine to operate by displaying content data provided from the main body of the game machine. The topper apparatus for a game machine includes a second engaging structure capable of being engaged to a first engaging structure on the upper portion of the main body of the game machine, and when the second engaging structure is engaged to the first engaging structure, the topper apparatus for a game machine is configured to receive at least one of power or the content data by coming into non-engaging contact with a non-engaging contact transmitting module located on the upper portion of the main body of the game machine.

In one embodiment, the non-engaging contact receiving module is located in an inner space formed by the second engaging structure included in the housing.

In one embodiment, the non-engaging contact transmitting module is located in an inner space formed by the first engaging structure on the upper portion of the main body of the game machine.

In one embodiment, the non-engaging contact receiving module comprises a plurality of spring pins arranged to be spaced apart from each other, and the non-engaging contact transmitting module comprises a plurality of electrode terminals arranged to correspond to an arrangement of the plurality of spring pins.

In one embodiment, when the first engaging structure and the second engaging structure are fixed, the plurality of spring pins are in contact with the plurality of electrode terminals to be energized.

In one embodiment, the plurality of spring pins comprises a first spring pin group for receiving power and a second spring pin group for receiving data, wherein the first spring pin group and the second spring pin group are spatially separated from each other.

In one embodiment, the first engaging structure is slidably fixed to the second engaging structure.

In one embodiment, the first engaging structure comprises a first surface and a second surface opposite to the first surface, and the second engaging structure comprises a third surface that slides in contact with the first surface and a fourth surface that slides in contact with the second surface and is opposite to the third surface.

In one embodiment, the non-engaging contact receiving module is provided in an inner space divided by the third surface and the fourth surface when the first engaging structure and the second engaging structure are fixed.

In one embodiment, the third surface and the fourth surface are made of a non-metallic material.

The solutions for solving the above-described problems do not enumerate all features of the present invention. Various solutions for achieving the objectives of the present invention will be more clearly understood with reference to specific embodiments described in detail below.

### Advantageous Effects

According to the present invention, one or more of the following effects are provided.

According to an embodiment of the present invention, by applying the non-engaging contact receiving module to the topper apparatus, it is possible to conveniently provide an electrical connection between the topper apparatus and the game machine without a separate wiring engaging operation when the topper apparatus is engaged to the game machine.

Further, according to an embodiment of the present invention, it is possible to conveniently provide a power transmission and a data transmission connection between the topper apparatus and the game machine without a separate connection engaging operation by using the power reception connector and the data transmission connector included in the non-engaging contact receiving module of the topper apparatus.

In addition, according to an embodiment of the present invention, when the non-engaging contact receiving module of the topper apparatus comes into contact with and applies electric current to the game machine device, the contact angles of the power reception connector and the data transmission connector included therein are made different from each other, thereby minimizing overlapping noise caused by a magnetic field generated during the application of electric current, and thus it is possible to proactively prevent noise of transmission data.

The effects of the present invention are not limited to the effects mentioned above, and other effects not mentioned will be clearly understood by those skilled in the art from the description of Claims.

### Description of Drawings

FIG. 1 is a perspective view illustrating an example of a game machine to which a topper apparatus according to an embodiment of the present invention is engaged.
FIG. 2 is a plan view illustrating a state in which the topper apparatus is separated from the game machine shown in FIG. 1.
FIG. 3 is a block diagram illustrating a topper apparatus for a game machine according to an embodiment of the present invention.
FIG. 4 is a front view illustrating an example of a topper apparatus according to an embodiment of the present invention.
FIG. 5 is a side cross-sectional view illustrating an example of engaging a topper apparatus for a game machine according to an embodiment of the present invention.
FIG. 6 is a diagram illustrating an example of a non-engaging contact receiving module of a topper apparatus for a game machine according to an embodiment of the present invention.
FIGS. 7 and 8 are diagrams for describing an example of contact energization of the non-engaging contact receiving module of the topper apparatus for a game machine shown in FIG. 6.
FIG. 9 is a diagram illustrating another example of the non-engaging contact receiving module of the topper apparatus for a game machine according to an embodiment of the present invention.
FIGS. 10 and 11 are diagrams illustrating an example of contact energization of the non-engaging contact receiving module of the topper apparatus for a game machine shown in FIG. 9.
FIG. 12 is a diagram illustrating another example of a non-engaging contact receiving module of a topper apparatus for a game machine according to an embodiment of the present invention.
FIG. 13 is a diagram illustrating an example of contact-based energization of the non-engaging contact receiving module of the topper apparatus for a game machine shown in FIG. 12.

### Best mode

Hereinafter, preferred embodiments of the present invention will be described with reference to the accompanying drawings.

However, the embodiments of the present invention may be modified in various forms, and the scope of the present invention is not limited to the embodiments described below. The embodiments are provided merely to more fully explain the present invention to those skilled in the art.

The various embodiments and terms used in this document are not intended to limit the technical features described herein to specific embodiments, but should be understood to include various modifications, equivalents, or alternatives of the embodiments. In the description of the drawings, similar reference numerals may be used for similar or related components. The singular form of a noun corresponding to an item may include both the singular and plural forms unless clearly indicated otherwise by the context. In this document, expressions such as "A or B," "at least one of A and B," "at least one of A or B, " "A, B, or C," "at least one of A, B, and C," and "at least one of A, B, or C" are intended to encompass any one or all possible combinations of the listed elements. Terms such as "first," "second," "primary," or "secondary" may be used merely to distinguish one component from another and do not necessarily imply importance or order. When a component (e.g., a first component) is referred to as being "coupled," "connected," or "linked" to another component (e.g., a second component), with or without the terms "functionally" or "communicatively," it is to be understood that the component may be directly connected to the other component or indirectly connected through a third component.

The term "module" as used in this document may include a unit implemented in hardware, software, or firmware, and may be used interchangeably with terms such as logic, logic block, component, or circuit. A module may be an integrated component or a minimum unit or a part of a component that performs one or more functions. For example, in one embodiment, the module may be implemented in the form of an application-specific integrated circuit (ASIC).

Although various flowcharts are disclosed to describe embodiments of the present invention, they are provided for the convenience of explanation, and the respective steps are not necessarily performed in the order shown in the flowcharts. That is, the steps in the flowcharts may be performed simultaneously, sequentially as illustrated, or in a reverse order from that shown in the flowcharts.

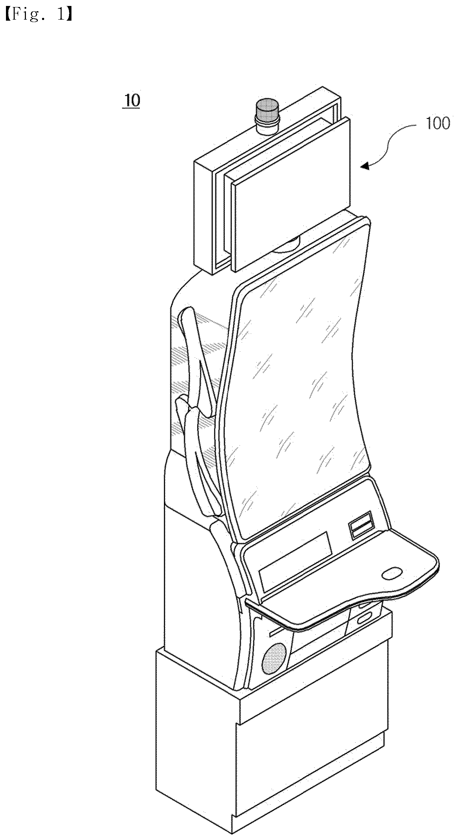

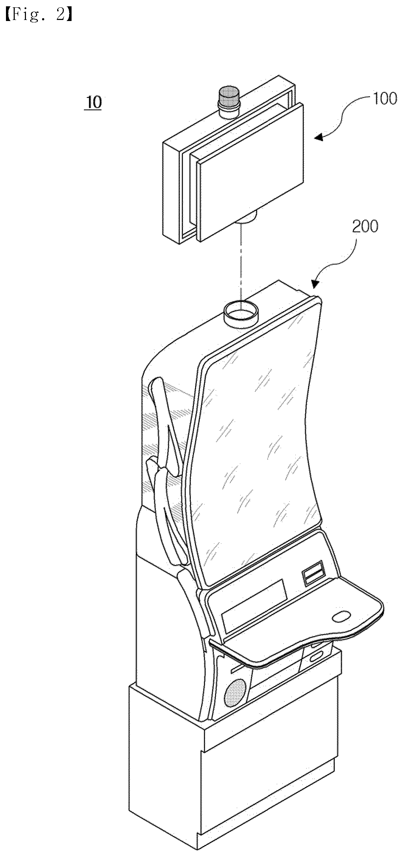

FIG. 1 is a perspective view illustrating an example of a game machine to which a topper apparatus according to an embodiment of the present invention is engaged, and FIG. 2 is a plan view illustrating a state in which the topper apparatus is separated from the game machine shown in FIG. 1.

A game machine 10 is illustrated in FIGS. 1 and 2. The game machine 10 may include its own main body display, and may provide a game to a user by displaying game content through the main body display device.

The game machine 10 may include an input device capable of receiving a user's manipulation input, and may receive the user's manipulation using the input device, and according to an embodiment, may provide various input/output interfaces to the user, such as providing a touch function to the main body display.

As one output interface of the game machine 10, the topper apparatus 100 for a game machine may be used. The topper apparatus 100 for a game machine may be engaged to an upper portion of a main body 200 of the game machine, and may display content data provided from the main body 200. Examples of the content data displayed by the topper apparatus 100 for a game machine include content for a game executed in the main body 200 of the game machine, event content for notifying an occurrence of an event such as a jackpot in the main body 200 of the game machine, and the like.

The topper apparatus 100 for a game machine may be separated from the main body, and may be fixed by being engaged to a housing of the main body. In this case, the topper apparatus 100 for a game machine includes a non-engaging contact receiving module which is in non-engaging contact with the non-engaging contact transmitting module on the upper part of the main body of the game machine to be energized, and accordingly, it is possible to conveniently provide an electrical connection between the topper apparatus and the game machine without a separate wiring engaging operation.

That is, the topper apparatus 100 for a game machine may receive power from the main body of the game machine 200 in a non-engaging contact manner without engaging a separate power line to the main body of the game machine 200. That is, by using the power reception connector and the data transmission connector included in the non-contact receiving module, the topper apparatus 100 for a game machine may conveniently provide power transmission and data transmission connection between the topper apparatus and the game machine without a separate connection engaging operation.

Accordingly, as shown in FIG. 2, it is easy to separate only the topper apparatus 100 for a game machine. Accordingly, when the entire game machine is moved, the main body and the topper apparatus 100 for a game machine can be individually transported, so that damage to the topper apparatus 100 for a game machine caused when the game machine is moved can be prevented in advance, and repair and maintenance of the topper apparatus 100 for a game machine can be easily performed.

In addition, according to an embodiment of the present disclosure, the topper apparatus 100 for a game machine may prevent noise of transmission data in advance by minimizing overlapping noise caused by a magnetic field generated during energization by making contact angles of the power reception connector and the data transmission connector included therein different from each other when the non-engaging contact receiving module is brought into contact with and energized on the game machine.

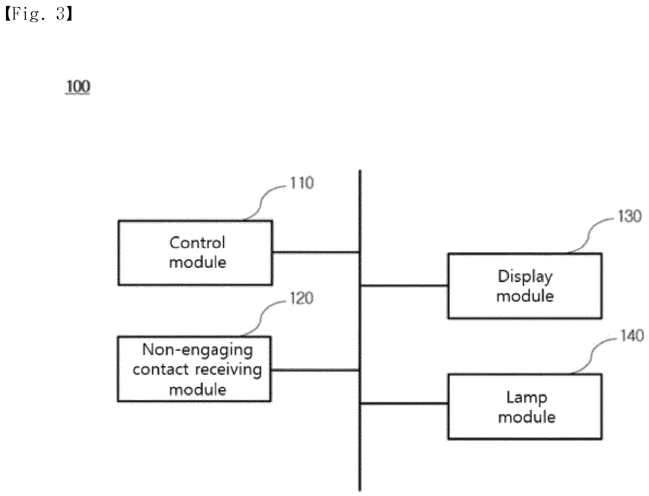

The topper apparatus 100 for a game machine will be described in more detail below with reference to FIGS. 3 to 13.

FIG. 3 is a block diagram illustrating a topper apparatus for a game machine according to an embodiment of the present invention.

Referring to FIG. 3, the topper apparatus 100 for a game machine may include a control module 110, a non-engaging contact receiving module 120, a display module 130, and a lamp module 140.

The control module 110 may control the operation of the topper apparatus 100 by controlling other components of the topper apparatus 100. To this end, the control module 110 may include a computing device (e.g., a central processing unit, etc.) and a storage device (e.g., a memory, etc.), and may provide a control function based on instructions executed by the computing device and the storage device.

For example, the control module 110 may control the display of the display module 120 using content data provided from the main body 200.

As an example, the control module 110 may receive event occurrence information from the main body of the game machine and control to display event content suitable for an event situation of the main body of the game machine.

The non-engaging contact receiving module 120 is in non-engaging contact with the non-engaging contact transmitting module located on the upper part of the main body and conduct electricity. For example, the non-engaging contact receiving module 120 may include a spring pin such as a pogo pin, and the non-engaging contact transmitting module located on the upper portion of the gaming machine body may include an electrode terminal on which the spring pin may be contacted or seated.

The topper apparatus 100 may receive data for displaying content data or event data from the main body 200 through the non-engaging contact receiving module 120. According to an embodiment, the non-engaging contact receiving module 120 may receive power as well as data from the main body 200.

The non-engaging contact receiving module 120 may use various wired-based communication methods, and may support, for example, a serial port for a serial communication method such as RS-232, RS-422, RS-485, or the like, or a USB communication port.

The display module 130 may include a display and a light emitting edge provided at an edge of the display module. The light-emitting edge may be formed at an outer periphery of the display module, and may include a light-emitting element and a medium element (e.g., a diffuser, etc.) that propagates light generated by the light-emitting element. The light emitting border is a component for adding a visual effect, and the display and the light emitting border operate according to the control of the control module 110.

The lamp module 140 is a lamp that is provided at an upper portion of the topper apparatus 100 for a game machine and is driven when an event such as a jack pot occurs in a main body of the game machine, and operates according to a control of the control module 160. As an example, the lamp module 140 may include an internal light source capable of rotating or blinking, and may also include a speaker.

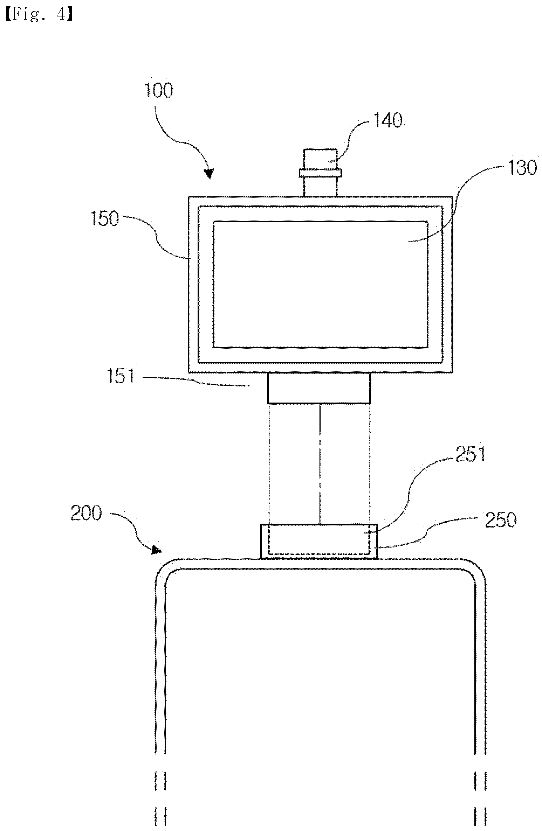

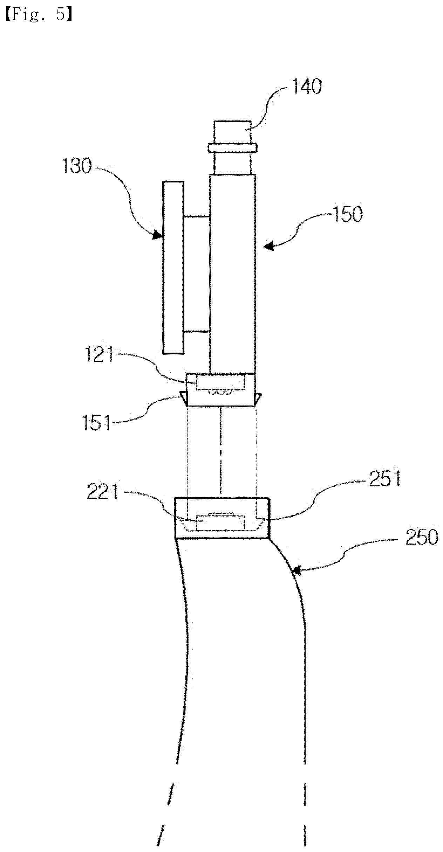

FIG. 4 is a front view illustrating an example of a topper apparatus according to an embodiment of the present invention, and FIG. 5 is a side cross-sectional view illustrating an example of engaging a topper apparatus for a game machine according to an embodiment of the present invention. Hereinafter, an example of the topper apparatus will be described with reference to FIGS. 4 and 5.

In the example shown in FIGS. 4 and 5, the topper apparatus 100 includes a housing 150. The display module 130 and the lamp module 140 may be fixed to the housing 150. The housing 150 includes a engaging structure that may be engaged to an upper portion of the main body 200. Although not shown, the control module 110 may be provided in an inner space of the housing 150.

The housing 150 includes a second engaging structure 151 that can be engaged to the first engaging structure 251 on the upper portion of the main body of the game machine.

For example, as shown in the illustrated example, the second engaging structure 251 of the housing 150 may be slid and inserted into the first engaging structure 251 on the upper portion of the main body of the game machine. According to an embodiment, elements for engaging between the second engaging structure 151 and the first engaging structure 251 may be variously modified and implemented, and for example, may be variously applied, such as a male-female engaging structure, a engaging structure using a engaging piece and a piece hole, and the like.

Referring to the example shown in FIG. 5, the non-engaging contact receiving module 121 is shown, and the non-engaging contact receiving module 121 may be located in an inner space formed by the second engaging structure 151. In addition, the non-engaging contact transmitting module 221 of the main body may also be located in the inner space formed by the first engaging structure 251.

In an embodiment, each of the second engaging structure 151 and the first engaging structure 251 may include at least two surfaces supported in contact with each other. In the example illustrated in FIGS. 4 and 5, the second engaging structure 151 and the first engaging structure 251 are illustrated as being in contact with each other on four surfaces, but the disclosure is not limited thereto, and various modified embodiments in which at least two surfaces thereof are in contact with each other, such as a cylindrical shape, may be applied.

For example, the first engaging structure 251 may include a first surface and a second surface opposite to the first surface. In addition, the second engaging structure 151 may include a third surface that contacts the first surface of the first engaging structure 251 and slides, and a fourth surface that faces the third surface and contacts the second surface of the first engaging structure 251 and slides. In this example, the non-engaging contact receiving module 121 and the non-engaging contact transmitting module 221 may be provided in an inner space divided by the third surface and the fourth surface when the first engaging structure and the second engaging structure are fixed to each other.

For example, at least a portion of each surface of the first engaging structure 251 and the second engaging structure 151, for example, the third surface and the fourth surface, may be made of a non-metal material such as reinforced plastic. This is to cancel out noise that may occur when the spring pin contacts by using a non-metallic material.

In an embodiment, a magnetic field shielding sheet may be attached to the inside of the second engaging structure 151 of the topper apparatus, that is, the inside of the third surface and the fourth surface, to include a magnetic field shielding layer. The magnetic field shielding sheet may be configured using at least some of a metal-based material such as Ag, Cu, Ni, ZnO, SnO2, and Al, a carbon-based material such as Acetylene Black, Channel Black, and PAN/Pich, and a conductive polymer-based material such as polyaniline, polypyrrole, and polythiophene. Such a magnetic field shielding sheet is for preventing a magnetic field or the like, which is induced when a spring pin is in contact or energized, from affecting the topper apparatus. By providing such a magnetic field shielding sheet, it is possible to minimize the influence of the magnetic field on a display, circuit components, and the like.

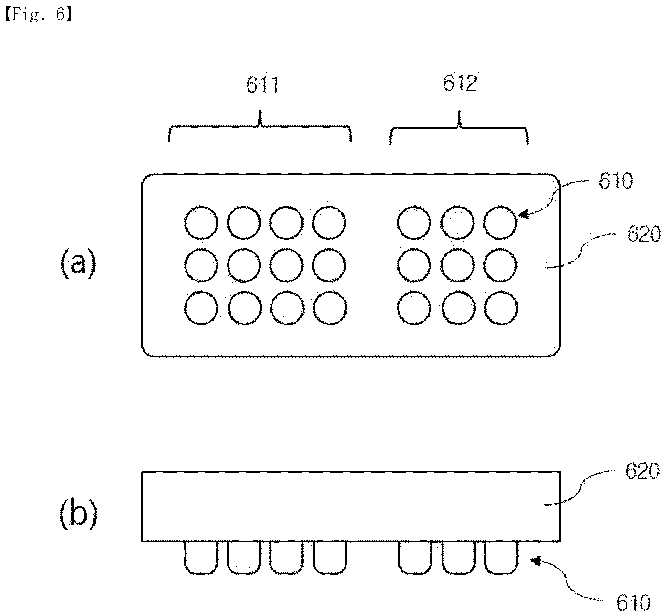

FIG. 6 is a diagram illustrating an example of a non-engaging contact receiving module of a topper apparatus for a game machine according to an embodiment of the present invention. Figure (a) of FIG. 6 shows a bottom view of the non-engaging contact receiving module, and figure (b) shows a side view of the non-engaging contact receiving module.

The non-engaging contact receiving module may include a body part 620 and a plurality of spring pins 610 provided on one surface of the body part and arranged to be spaced apart from each other. The plurality of spring pins may be in contact with a plurality of electrode terminals included in the non-engaging contact transmitting module, which are arranged to correspond to the arrangement of the plurality of spring pins, to be energized.

In an embodiment, the plurality of spring pins 610 may include a first spring pin group 611 for power reception and a second spring pin group 612 for data reception. The first spring pin group and the second spring pin group may be spatially separated from each other and separated from each other.

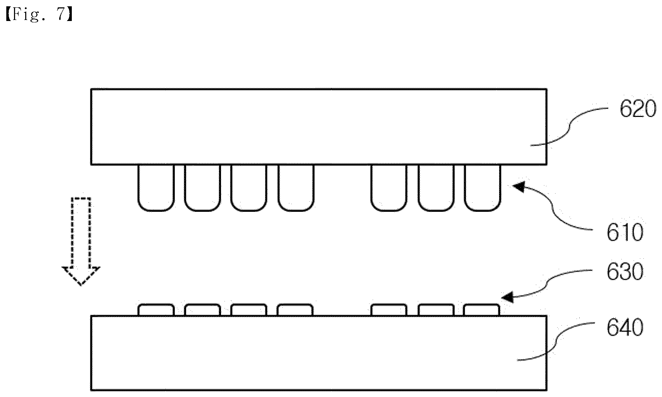

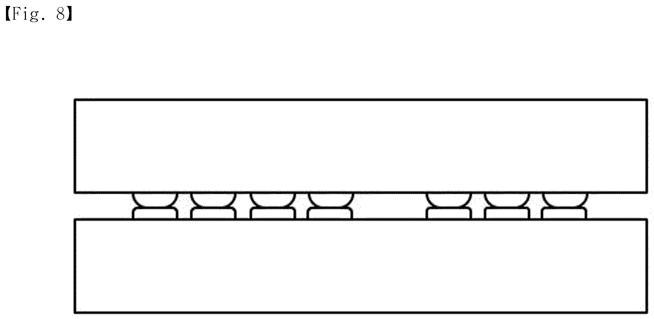

FIGS. 7 and 8 are diagrams for describing an example of contact energization of the non-engaging contact receiving module of the topper apparatus for a game machine shown in FIG. 6.

FIG. 7 shows a state in which the topper apparatus 100 slides on the upper portion of the main body 200, and FIG. 8 shows the non-contact receiving modules 610 and 620 and the non-contact transmitting modules 630 and 640 in a state in which the topper apparatus 100 is seated and fixed on the upper portion of the main body 200. As described above, when the second engaging structure 151 and the first engaging structure 251 are engaged to each other, the non-engaging contact receiving modules 610 and 620 and the non-engaging contact transmitting modules 630 and 640 are positioned to be in contact with each other and to be energized.

The spring pin 610 of the non-engaging contact receiving module comes into contact with the contact terminal 630 of the non-engaging contact transmitting module in the process of sliding the topper apparatus 100 and maintains the contact state as shown in FIG. 8 while the spring is reduced according to the close contact in the process of being seated.

In FIG. 8, it has been described that the non-contact receiving module has the spring pin and the non-contact transmitting module has the contact terminal, but the present disclosure is not limited thereto, and the non-contact receiving module has the contact terminal and the non-contact transmitting module has the spring pin.

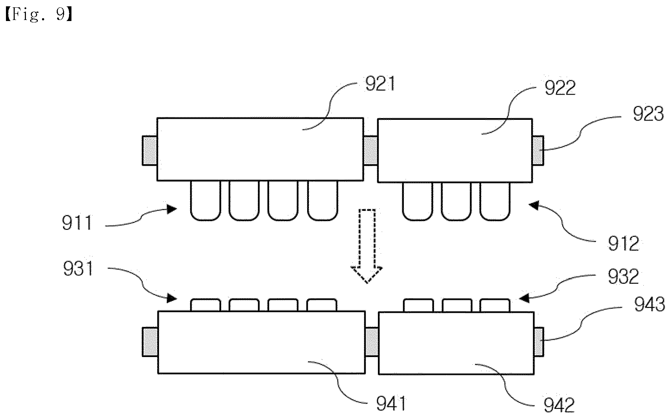

In an embodiment, when the topper is engaged to the game machine, the non-engaging contact receiving module may rotate so that the first spring pin group for power reception and the second spring pin group for data reception have different horizontal states. This embodiment will be described with reference to FIGS. 9 to 11.

FIG. 9 is a diagram illustrating another example of the non-engaging contact receiving module of the topper apparatus for a game machine according to an embodiment of the present invention.

Referring to FIG. 9, the non-engaging contact receiving module is divided into a first part 921 for power reception and a second part 922 for data reception. A first spring pin group 911 for receiving power is provided in the first part 921, and a second spring pin group 912 for receiving data is provided in the second part 922.

For example, the first part 921 and the second part 922 may be disposed around one rotation axis 923, but are not limited thereto, and may each have an individual rotation axis.

Also, the non-contact transmission module is divided into a third part 941 for power transmission and a fourth part 942 for data reception, and the third part 941 is provided with a third electrode terminal group 931 for power transmission, and the fourth part 922 is provided with a fourth electrode terminal group 932 for data transmission.

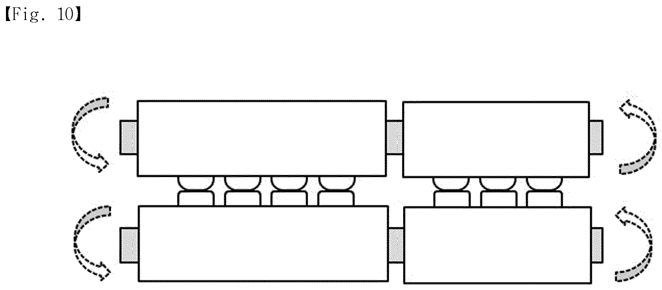

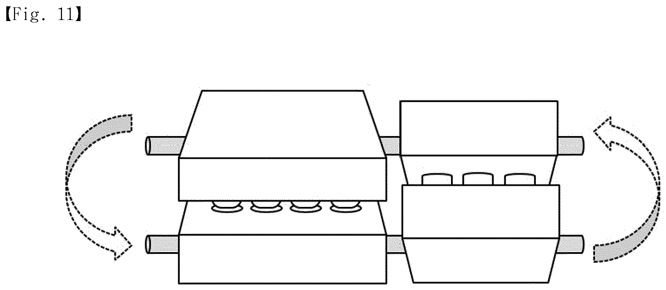

FIGS. 10 and 11 are diagrams illustrating an example of contact energization of the non-engaging contact receiving module of the topper apparatus for a game machine shown in FIG. 9.

As shown in FIG. 10, when the topper is seated on the upper portion of the game machine, the first part of the non-engaging contact receiving module comes into contact with the third part of the non- engaging contact transmitting module and the second part of the non-engaging contact receiving module come into contact with the fourth part of the non-engaging contact transmitting module, and accordingly, they rotate in different directions.

That is, as shown in FIG. 11, the first part of the non-engaging contact receiving module and the third part of the non-engaging contact transmitting module which are in contact with each other rotate in a first direction, and the third part of the non-engaging contact receiving module and the fourth part of the non-engaging contact transmitting module which are in contact with each other rotate in a second direction different from the first direction.

To this end, each part of the non-engaging contact receiving module and the non-engaging contact transmitting module may have a rotating configuration for rotating at a predetermined angle in a preset rotation direction and then fixing the rotation direction, and for example, a latch may be formed on one side of the rotating shaft, and each part of the non-engaging contact receiving module and the non-engaging contact transmitting module may have an inner space in which the latch may rotate at a predetermined angle. In addition, various configurations that rotate at some angle are applicable.

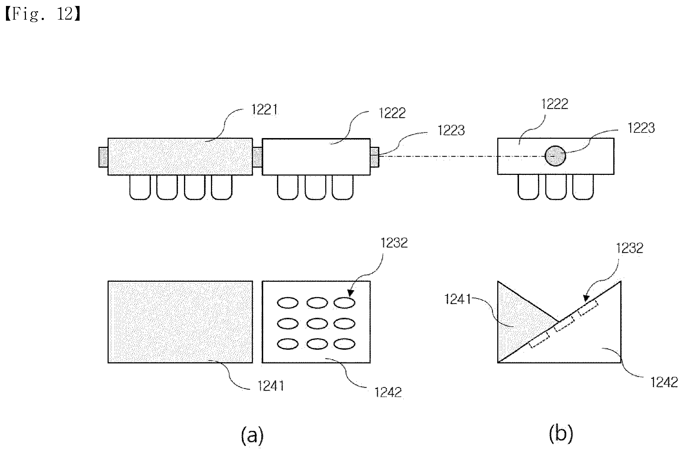

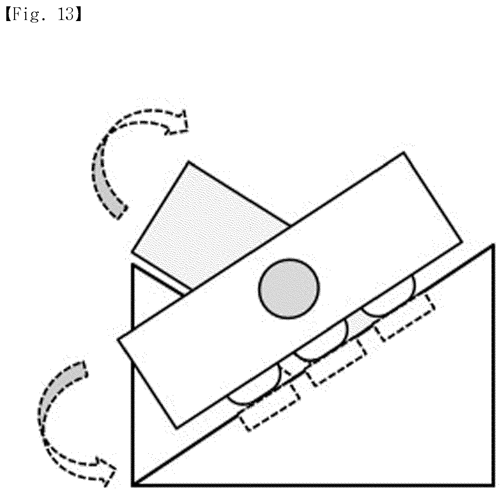

FIG. 12 and FIG. 13 illustrate another embodiment in which the first spring pin group for receiving power and the second spring pin group for receiving data are rotated to have different horizontal states when the topper is engaged to the game machine.

FIG. 12 is a diagram showing another example of the non-engaging contact receiving module of the topper apparatus for a game machine according to an embodiment of the present invention, wherein FIG. 12(a) is a front view before contact of the non-engaging contact receiving module and the non-engaging contact transmitting module, and FIG. 12(b) is a side view before contact of the non-engaging contact receiving module and the non-engaging contact transmitting module.

In the example shown in FIG. 12, the non-engaging contact receiving module is divided into a first part 1221 for power reception and a second part 1222 for data reception. A first spring pin group 1211 for receiving power is provided in the first part 1221, and a second spring pin group 1212 for receiving data is provided in the second part 1222.

For example, the first part 1221 and the second part 1222 may be disposed around one rotation axis 1223, but are not limited thereto, and may each have an individual rotation axis.

The non-engaging contact transmitting module includes a third part 1241 and a fourth part 1242 having different inclination angles. The third part 1241 includes a first electrode terminal group (not shown) for power reception, and the fourth part 1242 includes a second electrode terminal group 1232 for data reception.

When the topper is seated on the upper portion of the game machine, the first part of the non-engaging contact receiving module comes into contact with the third part of the non-engaging contact transmitting module and the second part of the non-engaging contact receiving module come into contact with the fourth part of the non-engaging contact transmitting module, and as shown in FIG. 13, the spring pin and the electrode terminal may be in contact with each other while rotating according to the inclination angle of each part of the non-engaging contact transmitting module.

As described above with reference to FIGS. 9 to 13, when the part for power transmission and the part for data reception have different horizontal lines, it is possible to prevent the overlapping of the induced magnetic field caused by the energization in advance, thereby minimizing the resulting noise.

When the spring pin and the terminal are in contact with each other, an induced magnetic field is more smoothly generated as a conductive line in a vertical direction is generated, thereby minimizing the influence of the induced magnetic field.

The present invention is not limited to the foregoing embodiments and the accompanying drawings, but is defined by the scope of the following claims. It will be apparent to those skilled in the art that various modifications and alterations can be made to the invention without departing from the spirit and scope of the technical idea of the present invention.

### < Description of Reference Numerals>

10: Game machine
100: Topper apparatus for game machine
110: Control module
120: Non-engaging contact receiving module
130: Display module
140: Lamp module
200: Main body of game machine

### Industrial Applicability

According to an embodiment of the present invention, by applying the non-engaging contact receiving module to the topper apparatus, it is possible to conveniently provide an electrical connection between the topper apparatus and the game machine device without a separate wiring engaging operation when the topper apparatus is engaged to the game machine, and thus it has high industrial applicability.

Further, according to an embodiment of the present invention, it is possible to conveniently provide a power transmission and a data transmission connection between the topper apparatus and the game machine device without a separate connection engaging operation by using the power reception connector and the data transmission connector included in the non-engaging contact receiving module of the topper apparatus, and thus it has high industrial applicability.

In addition, according to an embodiment of the present invention, when the non-engaging contact receiving module of the topper apparatus comes into contact with and applies electric current to the game machine device, the contact angles of the power reception connector and the data transmission connector included therein are made different from each other, thereby minimizing overlapping noise caused by a magnetic field generated during the application of electric current, and thus it is possible to proactively prevent noise of transmission data, resulting in high industrial applicability.

## Claims

1. A topper apparatus for a game machine, which is engaged to the upper portion of a main body of the game machine and operates in conjunction with the game machine, and the topper apparatus for the game machine comprises:
a display module;
a housing to which the display module is fixed and which includes a second engaging structure capable of being engaged to a first engaging structure on the upper portion of the main body of the game machine; and
a non-engaging contact receiving module that is energized by coming into non-engaging contact with a non-engaging contact transmitting module, which is positioned on the upper portion of the main body of the game machine,
when the second engaging structure is engaged to the first engaging structure.

2. The topper apparatus for a game machine of claim 1, wherein the non-engaging contact receiving module is located in an inner space formed by the second engaging structure included in the housing.

3. The topper apparatus for a game machine of claim 2, wherein the non-engaging contact transmitting module is located in an inner space formed by the first engaging structure on the upper portion of the main body of the game machine.

4. The topper apparatus for a game machine of claim 1,
wherein the non-engaging contact receiving module comprises:
a plurality of spring pins arranged to be spaced apart from each other, and wherein the non-engaging contact transmitting module comprises:
a plurality of electrode terminals arranged to correspond to an arrangement of the plurality of spring pins.

5. The topper apparatus for a game machine of claim 4,
wherein when the first engaging structure and the second engaging structure are fixed, the plurality of spring pins are in contact with the plurality of electrode terminals to be energized.

6. The topper apparatus for a game machine of claim 4, wherein the plurality of spring pins comprises:
a first spring pin group for receiving power; and
a second spring pin group for receiving data,
wherein the first spring pin group and the second spring pin group are spatially separated from each other.

7. The topper apparatus for a game machine of claim 1, wherein the first engaging structure is slidably fixed to the second engaging structure.

8. The topper apparatus for a game machine of claim 7,
wherein the first engaging structure comprises:
a first surface and a second surface opposite to the first surface, and
the second engaging structure comprises:
a third surface that slides in contact with the first surface and a fourth surface that slides in contact with the second surface and is opposite to the third surface.

9. The topper apparatus for a game machine of claim 8,
wherein the non-engaging contact receiving module is provided in an inner space divided by the third surface and the fourth surface when the first engaging structure and the second engaging structure are fixed.

10. The topper apparatus for a game machine of claim 8,
wherein the third surface and the fourth surface are made of a non-metallic material.

11. A game machine comprising:
a main body of the game machine configured to display a game image through a main body display, and control an operation of a game according to an input of a user to provide the user with the game; and a topper apparatus for a game machine engaged to an upper portion of the main body of the game machine to operate by displaying content data provided from the main body of the game machine,
wherein the topper apparatus for a game machine includes a second engaging structure capable of being engaged to a first engaging structure on the upper portion of the main body of the game machine, and when the second engaging structure is engaged to the first engaging structure, the topper apparatus for a game machine is configured to receive at least one of power or the content data by coming into non-engaging contact with a non-engaging contact transmitting module located on the upper portion of the main body of the game machine.

12. The game machine of claim 11, wherein the topper apparatus for a game machine is engaged to an upper portion of a main body of the game machine and operates in conjunction with the game machine, and comprises:
a display module;
a housing to which the display module is fixed and which includes a second engaging structure capable of being engaged to a first engaging structure on the upper portion of the main body of the game machine; and
a non-engaging contact receiving module that is energized by coming into non-engaging contact with a non-engaging contact transmitting module, which is positioned on the upper portion of the main body of the game machine, when the second engaging structure is engaged to the first engaging structure

13. The game machine of claim 12, wherein the non-engaging contact receiving module is located in an inner space formed by the second engaging structure included in the housing.

14. The game machine of claim 13, wherein the non-engaging contact transmitting module is located in an inner space formed by the first engaging structure on the upper portion of the main body of the game machine.

15. The game machine of claim 12,
wherein the non-engaging contact receiving module comprises:
a plurality of spring pins arranged to be spaced apart from each other, and
wherein the non-engaging contact transmitting module comprises:
a plurality of electrode terminals arranged to correspond to an arrangement of the plurality of spring pins.

16. The game machine of claim 15,
wherein when the first engaging structure and the second engaging structure are fixed, the plurality of spring pins are in contact with the plurality of electrode terminals to be energized.

17. The game machine of claim 15, wherein the plurality of spring pins comprises:
a first spring pin group for receiving power; and
a second spring pin group for receiving data,
wherein the first spring pin group and the second spring pin group are spatially separated from each other.

18. The game machine of claim 12,
wherein the first engaging structure is slidably fixed to the second engaging structure.

19. The game machine of claim 18,
wherein the first engaging structure comprises:
a first surface and a second surface opposite to the first surface, and
the second engaging structure comprises:
a third surface that slides in contact with the first surface and a fourth surface that slides in contact with the second surface and is opposite to the third surface.
